# FASCICULE DE BREVET EUROPEEN

(11) **EP 1 990 849 B1**
(45) Date de publication et mention de la délivrance du brevet: **11.04.2012**
(21) Numéro de dépôt: 08155738.1
(22) Date de dépôt: 06.05.2008
(51) Int. Cl.: H01M 2/10, H01M 10/50

(54) **Module de batteries d'entrainement pour véhicule électrique à cellules à combustible ou hybride**
Batteriemodul zum Antrieb von elektrischen Fahrzeugen mit Brennstoff- oder Hybridzellen
Powering battery module for a fuel-cell or hybrid electric vehicle

(30) Priorité: 07.05.2007 DE 102007021293
(43) Date de publication de la demande: 12.11.2008
(73) Titulaire: Valeo Klimasysteme GmbH, 96476 Bad Rodach (DE)
(72) Inventeur: Haussmann, Roland, 69168 Wiesloch (DE)
(74) Mandataire: Léveillé, Christophe

(56) Documents cités:
- EP-A- 1 156 537
- EP-A- 1 274 137
- US-A1- 2002 102 454
- US-A1- 2002 177 035
- US-A1- 2005 170 240
- US-A1- 2006 078 789
- US-A1- 2006 232 135

## Description

L'invention concerne un module de batteries d'entraînement pour un véhicule électrique, à piles à combustible ou hydride qui sert au transport de personnes et/ou de marchandises, et qui présente plusieurs cellules de batteries séparées de l'extérieur par un boîtier propre de cellules, préfabriquées et rassemblées en un paquet de cellules. L'invention peut être utilisée sur des véhicules automobiles, aussi bien des véhicules utilitaires que d'autres véhicules.

Comme une réduction du CO₂ est imposée, le nombre des véhicules alimentés en électricité au moins à titre auxiliaire augmentera dans le futur. La présente invention prévoit d'utiliser comme source d'énergie de préférence des batteries à haute puissance à cellules de batteries au NiMH ou à ions Li. Ces cellules préfabriquées sont rassemblées en un paquet de cellules et raccordées en série de manière à pouvoir obtenir jusque 360 V à partir de nombreuses cellules de batteries individuelles qui présentent des batteries à haute puissance et plus précisément des accumulateurs à haute puissance d'une tension de 3,6 V. Le paquet de batteries est installé dans un boîtier métallique stable. Du fait de l'énorme taille de ces modules de batteries, ces derniers doivent être installés en des emplacements du véhicule auxquels on n'avait pas pensé jusque là pour le stockage d'énergie, par exemple en dessous de la carrosserie du véhicule, en arrière de l'essieu arrière. La stabilité du boîtier ainsi que le positionnement des différentes cellules batteries doivent également être garantis en cas d'accident pour empêcher que des courts-circuits ou même des incendies surviennent. Pour cette raison, il est également important d'utiliser des boîtiers stables.

Il est connu de EP1156537-A2 et EP1274137-A1 de tel boîtier qui comprennent des saillies de positionnement. Il est connu de US2006/0078789-A1 et de US2002/0102454-A1 de tel boîtier comportant en outre des dispositifs de refroidissement associés.

Le problème à la base de l'invention est de créer un module de batteries d'entraînement qui puisse être installé dans le véhicule plus aisément que précédemment et dont la conception permet d'adapter le module à différentes conditions gênantes d'environnement.

L'invention propose dans ce but, pour un module du type défini au début, un boîtier extérieur en matière synthétique qui sépare le module de l'extérieur tel que défini dans la revendication 1. Jusqu'ici, on n'avait pas pensé à utiliser une matière synthétique pour le matériau du boîtier extérieur des modules de batteries utilisés pour l'entraînement de véhicules. Grâce au boîtier en matière synthétique, on peut cependant adapter aisément la géométrie extérieure du boîtier à des conditions gênantes et à la géométrie optimale du paquet de batteries. L'intégration des cellules de batteries, leur maintien, le maintien d'un refroidissement actif à l'intérieur du boîtier extérieur et la compensation des tolérances des cellules de batteries peuvent être plus aisément réalisés au moyen d'un boîtier extérieur en matière synthétique. La fixation des passages pour les conducteurs électriques ou la commande ainsi que l'installation d'éléments tels que des pièces de fixation sur le côté extérieur du boîtier sont également plus faciles et plus aisées.

Dans l'invention, des saillies intérieures de positionnement sont formées sur le boîtier extérieur, s'engagent sur les cellules de batteries et les immobilisent. La formation de saillies de positionnement de préférence d'un seul tenant assure un maintien sûr et aisé à réaliser des différentes cellules de batteries ainsi que le maintien sûr des distances entre les cellules de batteries.

Les saillies de positionnement sont conçues et disposées de manière à retenir les cellules de batteries dans toutes les directions, c'est-à-dire aussi bien dans le sens de leur longueur que dans la direction transversale.

Habituellement, les cellules de batteries sont des corps cylindriques et en particulier parallélépipédiques ou cylindriques circulaires. Les saillies de positionnement s'étendent dans les espaces situés entre des cellules de batteries voisines.

L'invention consiste à donner différentes élasticités certaines parties des saillies de positionnement. La partie qui s'engage directement sur les cellules de batteries sera de préférence plus déformable et élastique, ce qui permet de reprendre les tolérances des dimensions extérieures des cellules de batteries et de maintenir ces dernières sans jeu et de manière sûre.

Pour obtenir les différentes élasticités, les saillies de positionnement peuvent présenter des parties en matières synthétiques différentes.

Habituellement, la partie des saillies de positionnement qui s'étend entre des cellules de batteries voisines est réalisée en une matière synthétique plus élastique que celle de la partie adjacente qui sert de support.

On peut aisément fabriquer des parties constituées de différentes matières synthétiques par moulage par injection à plusieurs composants.

Les saillies de positionnement s'engagent en particulier sur les côtés frontaux des corps cylindriques habituellement allongés ainsi que sur les bords de leur côté périphérique.

Comme pour permettre l'évacuation de la chaleur des cellules de batteries qui s'échauffent fortement lors de la charge et de la décharge, les côtés périphériques ne peuvent normalement pas être incorporés aussi fort dans la matière synthétique, on prévoit que les saillies de positionnement ne s'étendent dans le sens de la longueur que sur une partie de la longueur du côté des cellules de batteries associées. Cette longueur partielle représente de préférence entre 2 et 20 % de la longueur totale des cellules de batteries associées.

Dans le mode de réalisation préféré de l'invention, le module de batteries est doté d'un refroidissement actif qui présente la forme d'un circuit de refroidissement. Cela signifie qu'au moins un tube qui conduit un fluide de refroidissement s'étend dans le boîtier extérieur pour évacuer l'énergie thermique des cellules de batteries.

Il est avantageux que le tube soit également immobilisé dans le boîtier extérieur par des saillies de positionnement, de sorte que les saillies de positionnement remplissent une double fonction.

Comme il se poserait un problème considérable d'encombrement si le ou les tubes qui amènent le fluide de refroidissement devaient s'étendre le long de chaque cellule de batteries, il est avantageux d'utiliser une ou plusieurs ailettes de refroidissement. Ces dernières s'étendent depuis le tube ou le tronçon de tube qui leur est associé jusqu'à une ou plusieurs cellules de batteries pour s'appliquer à plat sur leur côté extérieur. Ces saillies de positionnement servent à cet égard également à immobiliser les ailettes dont l'épaisseur n'est que de 0,1 à 2,5 mm et de préférence de 0,5 à 1,5 mm.

Une saillie de positionnement peut s'engager sur plusieurs ailettes pour les immobiliser.

Les cellules de batteries peuvent être serrées latéralement entre plusieurs saillies de positionnement ou uniquement par une seule saillie de positionnement qui entoure au moins partiellement et par exemple en anneau la cellule de batterie correspondante.

Un mode de réalisation particulièrement simple du boîtier extérieur prévoit de configurer ce dernier sous la forme d'un corps de base ouvert d'un côté et d'un couvercle qui se raccorde au corps de base, des saillies de positionnement étant formées sur le corps de base et/ou sur le couvercle.

Des nervures qui permettent d'augmenter la stabilité du boîtier extérieur peuvent également être formées aisément en recourant à une matière synthétique.

Un matériau électriquement et thermiquement isolant peut aisément être intégré dans le boîtier, par exemple par injection ou moussage entre les nervures.

Le PP, le PA, le PPS et le PPA conviennent particulièrement bien comme matériaux pour le boîtier extérieur.

Les avantages de l'invention résident non seulement dans le fait qu'elle permet une adaptation plus aisée du contour extérieur du boîtier à l'espace de montage mais évidemment aussi dans une réduction de poids de l'ensemble du module de batteries. En cas d'accident ou dans un test de vibration, les forces appliquées dans le boîtier sont réparties uniformément. Du fait que les cellules de batteries et le dispositif de refroidissement sont fixés de manière séparée permet au module selon l'invention de réussir les tests d'accident. En outre, le boîtier de batterie peut également servir d'outil de montage pour les cellules si l'on enfiche directement les différentes cellules dans le boîtier. Ensuite, les dispositifs supplémentaires, par exemple les tubes de refroidissement ou les ailettes, peuvent être passés automatiquement entre les cellules déjà prépositionnées.

L'utilisation d'agents de refroidissement dits zéotropes pose des problèmes particuliers. Ce sont des mélanges de différents liquides qui présentent différentes températures de saturation. Pendant l'ébullition ou l'évaporation, la composition du liquide se modifie, de sorte que la température globale de saturation du liquide restant se modifie.

La présente invention prévoit également des possibilités d'utiliser des agents de refroidissement zéotropes pour le refroidissement de batteries d'entraînement. En effet, on a déjà expliqué plus haut que toutes les cellules de batteries doivent être maintenues si possible à la même température. L'utilisation d'un agent de refroidissement zéotrope s'oppose à cet objectif parce que l'agent de refroidissement voit sa température de saturation modifiée dans son parcours dans le module de batteries et que son effet de refroidissement se dégrade progressivement.

L'invention propose dans ce but un module de batteries d'entraînement qui présente plusieurs cellules de batteries séparées de l'extérieur par leur propre boîtier de cellule, rassemblées en paquet de cellules et au moins un tube qui conduit un agent de refroidissement zéotrope pour évacuer l'énergie thermique des batteries. Le tronçon de tube situé à l'intérieur du module de batteries est configuré de telle sorte que le fluide de refroidissement y subisse une perte de charge telle que la température de saturation du fluide de refroidissement reste essentiellement constante dans le tronçon de tube. L'invention compense la modification intrinsèque de la température de saturation par un contrôle de la perte de charge à l'intérieur du tronçon de tube.

De légères variations de température de ± 1 K sont tolérables et comprises dans la plage des variations de fabrication.

Dans le mode de réalisation préféré, la perte de charge prévue dans le tronçon tubulaire est comprise entre 0,25 et 0,75 bar.

Des possibilités d'obtenir cette perte de charge sont par exemple un rétrécissement et en particulier un rétrécissement progressif de la section transversale du tube en direction de la sortie, par exemple au moyen d'une diminution du diamètre ou d'un aplatissement du tube. Lorsque l'on fabrique les tronçons de tube en série, on peut également réaliser une perte de charge par le nombre des tronçons de tube.

Une autre solution de l'invention, qui permet l'utilisation d'agents de refroidissement zéotropes, prévoit plusieurs tronçons de tube qui conduisent un agent de refroidissement zéotrope et qui sont en contact direct thermique à l'intérieur de la batterie et qui sont traversés dans des sens opposés. Grâce à cet écoulement à contre-courant, les températures qui règnent dans les tronçons de tube s'égalisent, de sorte que l'on obtient globalement un effet de refroidissement uniforme.

Les tronçons de tube seront disposés dans la batterie de préférence parallèlement les uns aux autres et le plus près possible les unes des autres.

On obtient une compensation particulièrement bonne de la température lorsqu'une ou plusieurs ailettes de deux tronçons de tube se rejoignent, parce que la température s'équilibre ainsi en quelque sorte d'elle-même dans l'ailette.

D'autres caractéristiques et avantages de l'invention se dégagent de la description donnée ci-dessous et des dessins qui suivent, auxquels elle se réfère. Dans les dessins :
- la figure 1 est une vue latérale schématique d'une partie d'un module de batteries d'entraînement selon l'invention,
- la figure 2 est une vue agrandie de la partie de fond du boîtier extérieur du module de la figure 1,
- la figure 3 est une vue agrandie d'un module dont la partie de fond a été légèrement modifiée,
- la figure 4 est une vue en plan schématique du module selon l'invention après avoir enlevé le couvercle du boîtier,
- la figure 5 est une vue schématique en plan d'un autre mode de réalisation d'un module selon l'invention,
- la figure 6 représente une vue agrandie de la partie désignée par X et entourée par une ligne en traits interrompus dans la figure 5,
- les figures 7 à 9 représentent différentes vues de détail de possibilités de positionnement des ailettes dans le boîtier,
- la figure 10 est une vue schématique en plan d'un paquet de cellules utilisé dans l'invention et auquel un conduit de refroidissement est intégré,
- la figure 11 est une vue schématique en plan d'un autre paquet de cellules de batteries utilisé dans l'invention et doté d'un dispositif de refroidissement intégré,
- les figures 12 à 16 représentent dans des vues en plan d'autres variantes de paquets de cellules de batteries à dispositif de refroidissement intégré,
- la figure 17 représente une vue de détail agrandie d'une variante d'accouplement des ailettes au tube associé qui conduit un fluide de refroidissement,
- les figures 18 et 19 représentent des vues de détail agrandies de deux étapes successives de fabrication utilisées pour créer une autre variante d'accouplement des ailettes au tube associé,
- la figure 20 représente une vue de détail d'un tube qui conduit un fluide de refroidissement et sur lequel des ailettes ont été placées,
- la figure 21 représente une vue latérale schématique d'une variante de réalisation du module de batteries d'entraînement selon l'invention,
- la figure 22 représente une vue en plan du module de batteries de la figure 21 dont le couvercle a été enlevé,
- la figure 23 représente une vue schématique en plan d'un dispositif de refroidissement utilisé dans le module selon l'invention,
- les figures 24 à 26 représentent des vues agrandies dans la zone de la mise en contact des ailettes avec différents modes de réalisation des cellules de batteries,
- la figure 27 représente une vue en plan d'une deuxième variante d'une cellule de batterie entourée par une ailette,
- la figure 28 représente une vue latérale schématique d'une installation de fabrication d'une tôle revêtue à partir de laquelle les ailettes utilisées dans le module selon l'invention sont fabriquées,
- la figure 29 représente une vue en plan de l'installation de la figure 28,
- la figure 30 représente une vue schématique d'un tube qui conduit un agent de refroidissement zéotrope dans la zone du module, les ailettes ayant été retirées dans un souci de simplification,
- la figure 31 représente une vue du module en coupe le long de la ligne de coupe A-A de la figure 30,
- la figure 32 représente une vue du module en coupe le long de la ligne de coupe B-B de la figure 30,
- la figure 33 représente une vue schématique d'une deuxième variante selon l'invention d'un tube qui conduit un agent de refroidissement zéotrope dans la zone du module de batteries, les ailettes ayant été omises dans un souci de simplification et
- la figure 34 représente une vue du module en coupe transversale dans la zone du tube le long de la ligne de coupe C-C de la figure 33.

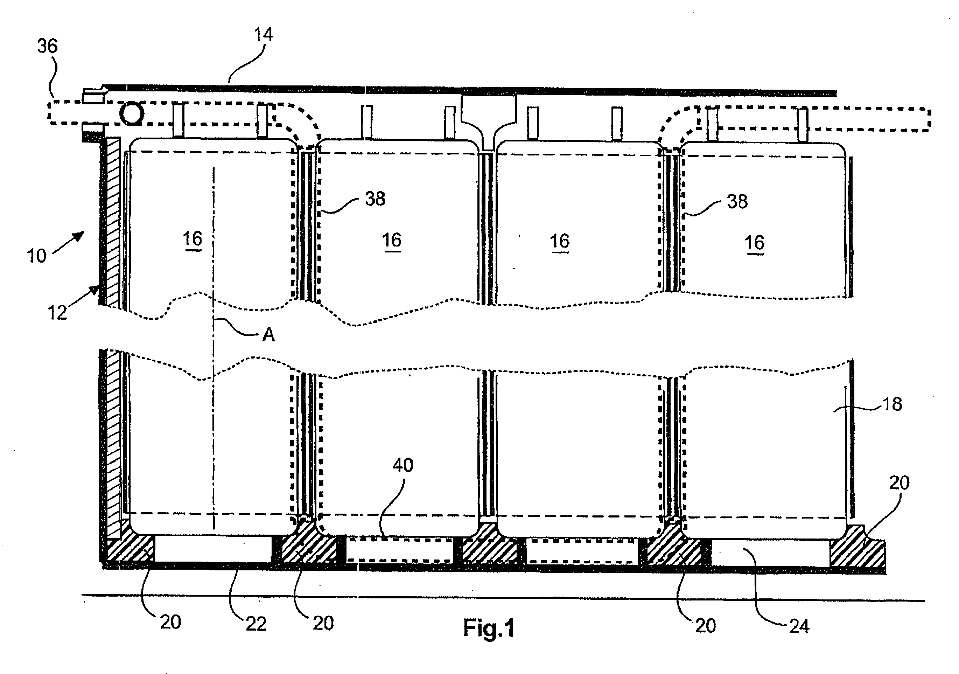

Dans la figure 1, on a représenté un module de batteries d'entraînement pour véhicule électrique, à cellules à combustible ou hybride doté d'un refroidissement actif. Le boîtier extérieur 10 est constitué d'un corps de base 12 ouvert d'un côté et en forme de récipient et d'un couvercle qui ferme le corps de base 12, tous deux étant fabriqués par moulage de matière synthétique (PP, PA, PPS ou PPA) par injection. De nombreuses cellules de batteries 10 sont installées dans le boîtier extérieur 16 et raccordées en série de manière à former une batterie à haute tension et plus précisément un accumulateur à haute tension. Les différentes cellules de batteries 16 sont des batteries au NiMH ou à ions Li et sont des unités intrinsèquement fermées qui sont séparées de l'extérieur par leur propre boîtier de cellule 18. Les cellules de batteries 16 sont rassemblées en un paquet avant leur montage dans le boîtier extérieur 10 ou ne sont rassemblées en paquet que lorsqu'elles sont placées dans le boîtier extérieur 10.

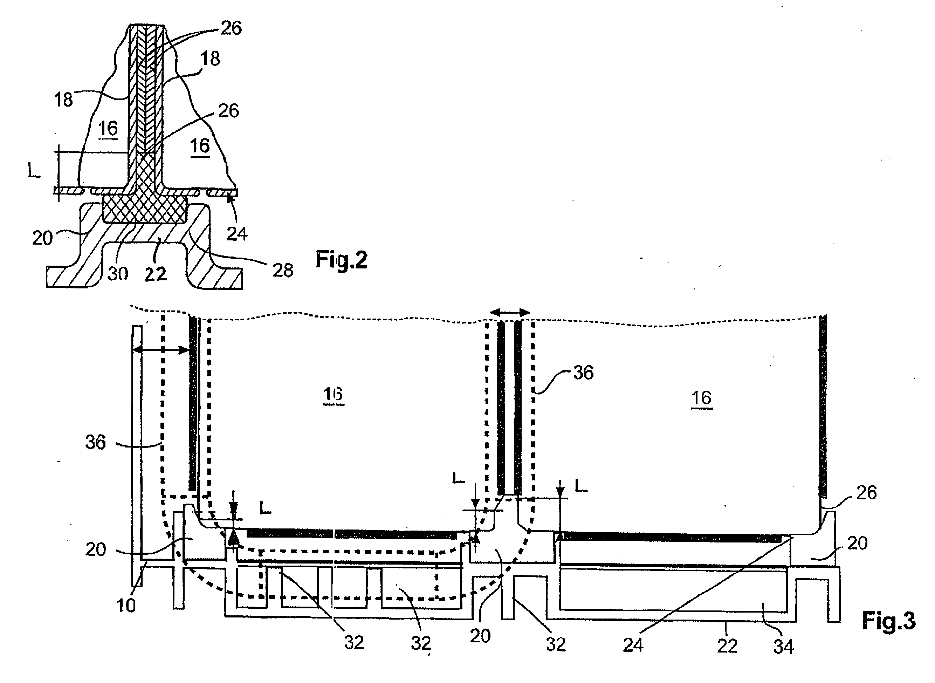

Les cellules de batteries 16 sont placées dans le boîtier extérieur 10 grâce au fait que le boîtier extérieur 10 présente du côté intérieur présente des saillies de positionnement 20 y sont formées d'un seul tenant et sont de préférence fabriquées par moulage par injection. Ainsi qu'on peut le voir dans les figures 1 à 3, les cellules 16 ont une géométrie extérieure cylindrique et en particulier cylindrique circulaire et les saillies de positionnement 20 débordent dans les espaces intermédiaires situés entre des cellules de batteries 16 voisines. Par les saillies de positionnement qui sont formées de préférence principalement sur le fond 22 et sur le couvercle 14, les cellules de batteries 16 sont positionnées avec précision dans toutes les directions, à savoir dans la direction de l'axe longitudinal A des cellules de batteries 16 et dans la direction radiale. Dans ce but, les saillies de positionnement 20 s'engagent sur les côtés frontaux 24 des cellules de batteries 16 et sur le bord axial de leur côté périphérique 26. La surface d'engagement est globalement assez petite, et dans le sens de la longueur, les saillies de positionnement 20 occupent de 2 à 20 % de la longueur totale du côté de la cellule de batteries 16 associée. La longueur correspondante L dans la direction axiale a été représentée dans les figures 2 et 3.

Les cellules de batteries 16 ont une tolérance non négligeable vis-à-vis du boîtier de cellule 18. Pour garantir que les cellules de batteries 16 soient fixées en position et sans jeu dans le boîtier extérieur 10, les saillies de positionnement 20 présentent des parties d'élasticités différentes. On l'a représenté à titre d'exemple dans la figure 2. Une première partie 28 s'étend jusqu'au bord frontal 24 et est constituée du même matériau que la partie du boîtier extérieur 10 visible de l'extérieur. Cette première partie 28 est relativement dure et stable et présente un logement pour une deuxième partie 30 à section transversale en T en matière synthétique de type caoutchouc et moins élastique, qui repose sur les côtés frontaux 24 et le côté périphérique 26 des boîtiers de cellule 18. Par le fait que la deuxième partie 30 est très déformable, on obtient un montage précontraint et compensant les tolérances des cellules de batteries 16. La fabrication du boîtier extérieur 10 avec des parties 28, 30 de différentes duretés ou de différentes élasticités s'effectue par le procédé appelé de moulage par injection à deux composants. Pour faciliter l'enfichage des cellules de batteries 16 dans des saillies de positionnement individuelles ou leur insertion entre plusieurs saillies de positionnement 20, ces dernières présentent des pentes d'insertion que l'on peut bien voir dans la figure 3.

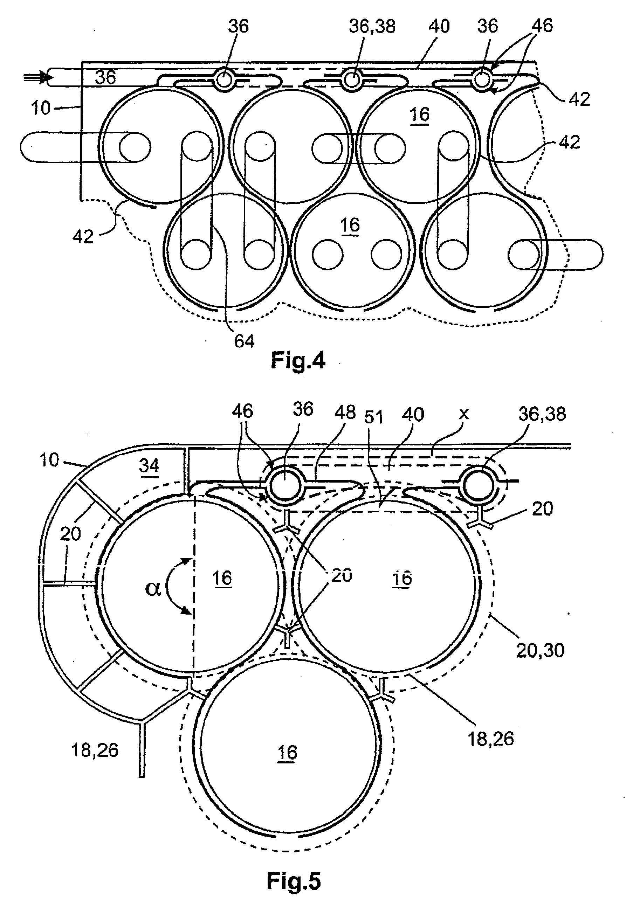

Dans la figure 5, on a représenté certaines saillies de positionnement 20 qui entourent complètement les cellules de batteries 16 sur leur bord périphérique. Cependant, il faudra prévoir au moins une pose en trois points sur la périphérie pour assurer un blocage latéral. Dans la variante représentée dans la figure 5, la deuxième partie 30 plus déformable entoure en boucle fermée les cellules de batteries 16 voisines. D'autres saillies de positionnement 20 qui présentent la forme de nervures ou de lattes en étoile maintiennent les cellules de batteries 16 latéralement par rapport à l'extérieur. En particulier, les cellules de batteries extérieures reposent sur des saillies de positionnement 20 en forme de nervure. Des saillies de positionnement en forme d'étoile débordent dans les espaces intermédiaires situés entre des cellules de batteries voisines, de sorte qu'une saillie de positionnement 20 contribue à maintenir plusieurs cellules de batteries 16. Certaines des saillies de positionnement représentées dans la figure 5, en forme de nervures ou d'étoile, débordent au-delà du bord axial du côté périphérique 26 jusque dans la partie centrale du côté périphérique 26 et même du fond 22 jusqu'à proximité du couvercle 14 ou, à l'inverse, du fond du couvercle 14 jusqu'au corps de base 12. Lorsque les cellules de batteries 16 sont trop grandes, les parties de positionnement 20 et éventuellement aussi le boîtier de cellule 18 se déforment.

Dans la figure 3, on peut également voir que des nervures 32 sont formées dans la zone du fond 22 pour augmenter la stabilité du boîtier extérieur 10. Entre les nervures 22 ou de façon tout à fait générale dans des parties définies du boîtier extérieur 10, on peut installer une couche d'isolation thermique 34, par exemple par moulage par injection à deux composants ou par moussage.

Ainsi qu'on l'a déjà mentionné plus haut, le module de batteries selon l'invention est doté d'un dispositif de refroidissement actif et de manière plus précise d'un circuit de refroidissement. Le dispositif de refroidissement est constitué d'un ou plusieurs tubes 36 qui conduisent un fluide de refroidissement, qui s'étendent dans le boîtier extérieur 10 et qui sont raccordés à l'extérieur du boîtier extérieur 10 par exemple à un circuit d'agent de refroidissement ou d'agent frigorifique. Le fluide de refroidissement peut être un mélange d'eau et de glycol, du R 134a, du CO₂ ou un autre agent de refroidissement qui s'écoule dans le circuit de refroidissement en différents états de phase. Le ou les tubes 36 ne s'étendent pas en ligne droite dans le boîtier extérieur 10 mais en méandres ou dans le sens le plus large, en créneaux. Cela signifie que le tube 36 possède des tronçons 38 qui s'étendent dans la direction de l'axe longitudinal A des cellules (voir figure 1) et des tronçons 40 qui s'étendent transversalement par rapport aux premiers. Grâce à cette disposition, on maximise la longueur de tube qui s'étend à l'intérieur du boîtier extérieur 10.

De nombreuses minces ailettes 42 sont fixées sur le tube 36. Les ailettes 42, qui ont une épaisseur de seulement 0,1 à 2,5 mm et de préférence de 0,5 à 1,5 mm et qui sont réalisées en aluminium, en cuivre ou en matériaux qui présentent une haute conductivité thermique appropriée, sont adaptées par tronçons à la forme extérieure du boîtier de cellule 18 et sont placées à plat par adaptation sous pression sur le côté périphérique 26 qu'ils épousent en quelque sorte. Lors de la fabrication des ailettes 42, on restera attentif à ce que leur position et leur géométrie soient accordées à celles des cellules de batteries 16, avec des dimensions extérieures situées à la limite inférieure. On garantit ainsi que l'ailette 42 puisse toujours s'adapter à la cellule de batteries 16 associée et repose sur elle à plat et sous précontrainte lorsque la cellule 16 est passée dans l'espace de réception correspondant défini par l'ailette 42 ou les différentes ailettes 42. Pour garantir un bon transfert de chaleur, plusieurs ailettes 42 sont posées directement sur un tube 36. Le mode d'installation des différentes ailettes 42 sur leur tronçon de tube est par exemple le collage, le soudage, le brasage ou une fixation mécanique. Dans les figures 4 et 5, on peut voir des ailettes 42 déformées en demi-coquilles 46 dans la zone du tube 36 et qui reposent sur les côtés opposés du tube 36 et entourent ce dernier à la manière d'une bride. Ainsi, des liaisons simples par vissage ou rivetage 48 peuvent repousser les ailettes 42 contre le tube 36.

Les ailettes 42 sont en contact avec au moins 40 % de la surface périphérique extérieure, c'est-à-dire le côté périphérique 26 du boîtier de cellule 18, de sorte que la portion correspondante du côté périphérique 26 du boîtier de cellule 18 est couverte par une ou plusieurs ailettes 42 pour que les ailettes 42 évacuent la chaleur des cellules de batteries 16 vers les tubes 36.

Dans les modes de réalisation représentés dans les figures 4 et 5, les différentes ailettes 32 entourent le boîtier de cellule 18 sur plus de 180° de sa périphérie (voir angle α) dans la direction de l'axe longitudinal A des cellules, de sorte que les ailettes 32 sont installées de manière auto-serrée sur le boîtier de cellule 18. Certaines des nervures et saillies de positionnement 20 en forme de latte mentionnées plus haut sont également placées sur les ailettes 42 et soutiennent encore ces dernières (voir figure 5). Dans les figures, on voit également bien que certaines cellules de batteries 16 sont serrées entre plusieurs ailettes 42 qui s'engagent sur des tronçons opposés de la périphérie extérieure du boîtier de cellule 18. Les ailettes 42 s'étendent en méandres le long des cellules de batteries 16 pour assurer le contact avec plusieurs cellules de batteries 16.

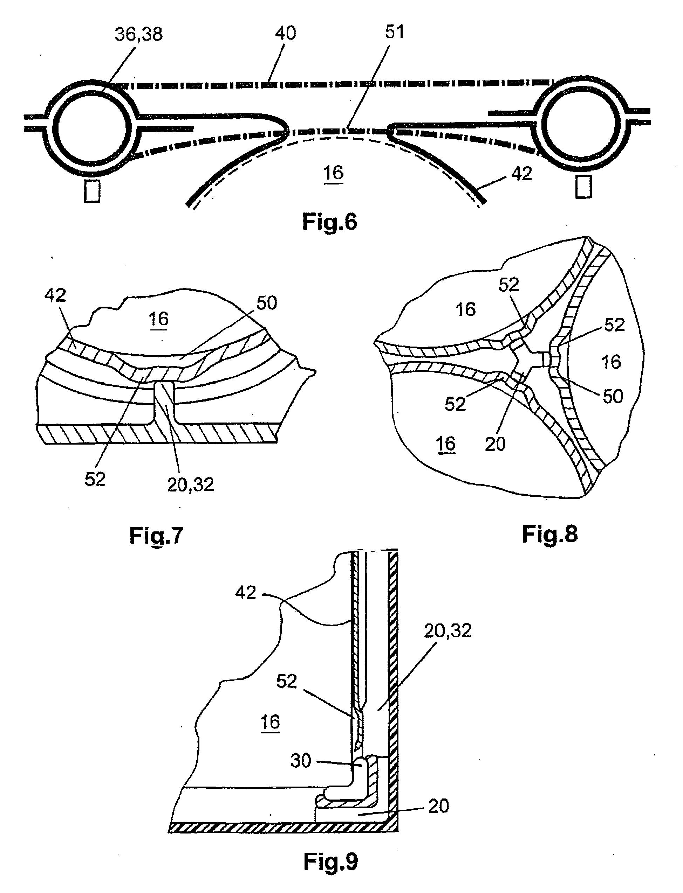

Ainsi qu'on l'a représenté entre les deux cellules de batteries 16 inférieures gauche de la figure 4, les tronçons d'ailettes de cellules de batteries 16 voisines peuvent se toucher, mais on prévoira de préférence un petit interstice par lequel les tolérances sur la périphérie extérieure des boîtiers de cellule 18 peuvent être reprises. Les ailettes 42 représentées ici ont toutes une zone bombée vers l'extérieur en forme de W et située à distance des cellules de batteries 16 (voir figures 7 à 9). L'interstice correspondant porte la référence numérique 50. La partie en forme de W forme une partie de maintien 52 en correspondance géométrique, dans le creux extérieur de laquelle une nervure 32 ou une saillie de positionnement 20 pénètrent. L'interstice 50 permet de conserver la flexibilité de l'ailette 42.

Dans la figure 8, on peut voir que l'élément de positionnement 20 en forme d'étoile positionne trois tronçons voisins d'ailettes par des tronçons de maintien 52 correspondants.

Ainsi qu'on l'a représenté dans la figure 9 par le bord inférieur de l'ailette 42, les tronçons de maintien 52 ne doivent pas davantage s'étendre sur toute la longueur axiale des ailettes 42 mais peuvent positionner uniquement un petit bord ou une petite partie des ailettes 42.

Les tubes 36 peuvent être disposés entièrement à l'extérieur du paquet de cellules ou, au cas où il y aurait encore assez de place entre les cellules de batteries 16, s'étendre en partie ou complètement dans les espaces intermédiaires correspondants. Dans le mode de réalisation des figures 4 à 6, les tronçons de tubes 38 qui s'étendent en longueur s'enfoncent en partie dans le paquet de cellules dont l'extérieur est défini par ce que l'on appelle l'enveloppante des cellules.

Dans la figure 5, l'enveloppante serait une ligne qui est appliquée comme tangente sur le côté extérieur des cellules de batteries extérieures 16, comme une toile tendue autour du paquet de batteries.

Comme le tronçon 38 qui s'étend en longueur s'étend en partie dans le paquet de cellules et que le tronçon 40 qui s'étend transversalement ne peut pas s'étendre en dessous du côté frontal inférieur 24 ou au-dessus du côté frontal supérieur 24 des cellules de batteries 16 mais latéralement sur ce dernier, le tube 36 dont la section transversale est sinon cylindrique circulaire est aplati d'un côté sur le côté tourné vers la cellule 16 correspondante dans son tronçon 40 qui s'étend transversalement. Le tronçon aplati ou enfoncé porte la référence numérique 51. Le tronçon 40 qui s'étend transversalement est ainsi situé à l'extérieur de l'enveloppante, reste à distance des cellules de batteries 16 et présente un encombrement latéral très petit. Ainsi, l'espace récupéré par les tronçons 38 qui s'enfoncent en partie dans le paquet ne s'agrandit pas non plus dans le tronçon 40 qui s'étend transversalement.

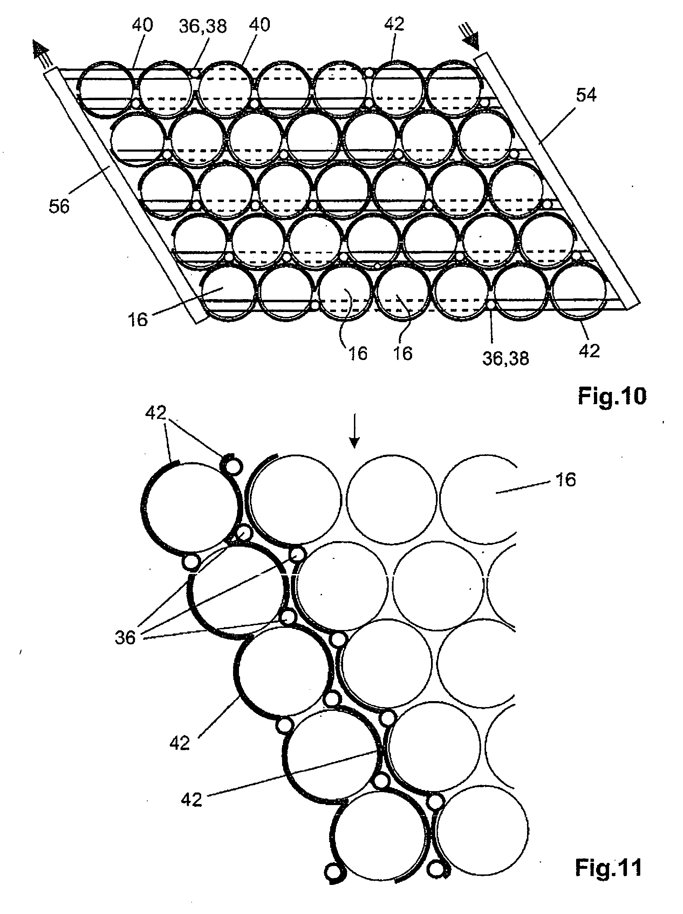

Les figures 10 et 11 montrent que des tubes 36 ou des tronçons de tubes peuvent également s'étendre entièrement à l'intérieur du paquet de cellules. Les parties des différents tubes 36 dessinées en trait continu montrent que ce sont des tronçons 40 qui s'étendent au-dessus du côté frontal supérieur 24, et en revanche, les tronçons 40 représentés en traits interrompus symbolisent des tronçons 40 qui s'étendent en dessous du côté frontal inférieur 24. Les tubes 36 proprement dits s'étendent par exemple parallèlement et commencent sur un collecteur d'admission 54 pour se terminer sur un collecteur de sortie 56. Les ailettes 42 installées sur les tubes 36 et de manière plus précise sur les tronçons 38 qui s'étendent en longueur sont représentées en un trait plus épais. Dans les figures 10 et 11, les ailettes 42 ont une forme ondulée et entourent une série de cellules de batteries 16 par leur côté extérieur ou sur leur côté intérieur. Les cellules de batteries 16 sont ainsi saisies par des côtés opposés et globalement en contact sur une grande surface avec les ailettes 42.

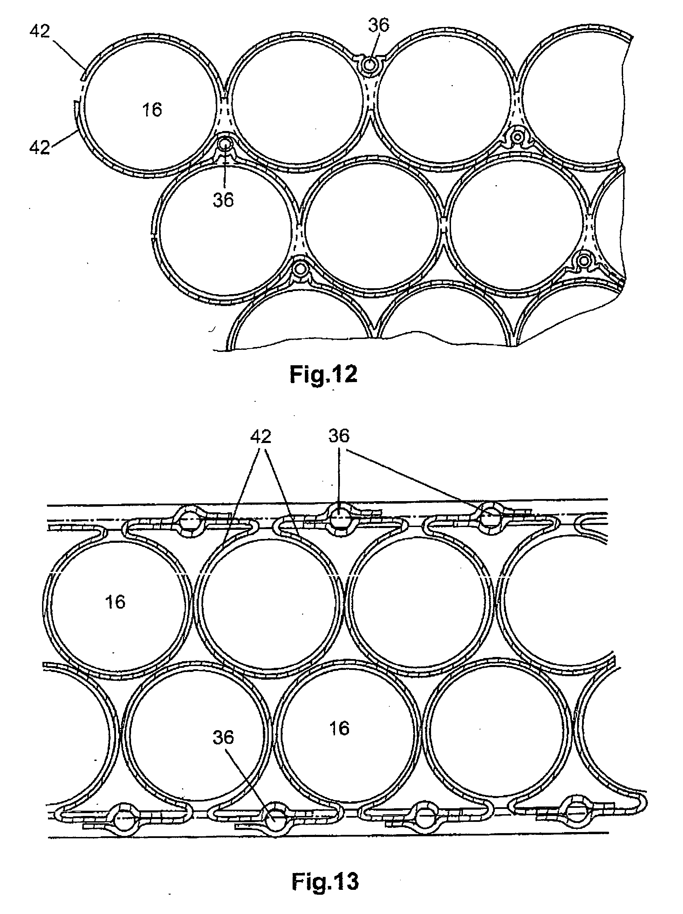

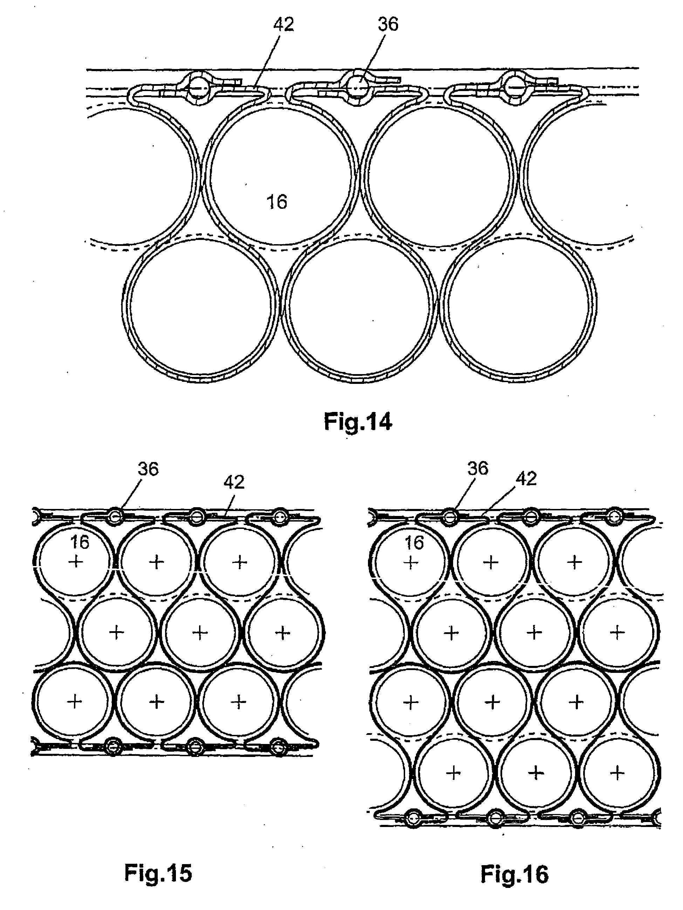

Les figures 12 à 16 divulguent différents modes de réalisation des ailettes 42 ainsi que des paquets de cellules de différentes épaisseurs. Les figures 12 et 15 représentent à titre d'exemple un paquet de cellules en trois rangées qui présente des rangées décalées mutuellement, les figures 13 et 14 un paquet de cellules en deux rangées avec un tube extérieur dans la figure 14 et deux tubes extérieurs dans la figure 13 et la figure 16 représente enfin un paquet de cellules à quatre rangées.

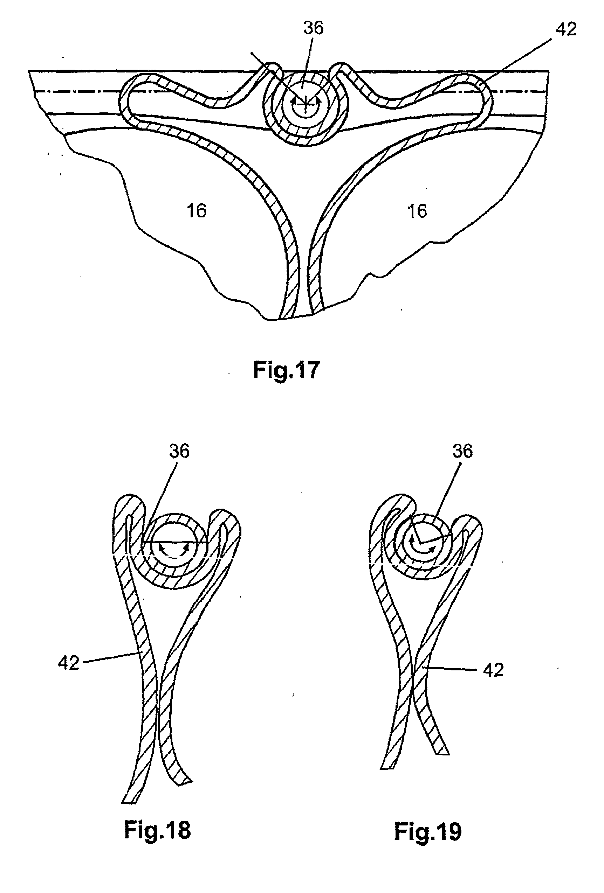

Dans les figures 17 à 19, on a représenté différents modes de réalisation qui montrent comment les ailettes 42 peuvent être réalisées dans la zone de leur liaison au tube 36.

Dans la figure 17, la partie centrale d'une ailette 42 est déformée essentiellement en forme de Ω et entoure le tube 36 sur près de 270° dans le sens de sa longueur. On forme entre l'ailette 42 et le tube 36 une pose sous pression qui assure également un bon positionnement de l'ailette 42 sur le tube 36. L'ailette 42 peut déjà avoir été déformée de manière appropriée avant d'être clipsée sur le tube, ou encore être sertie de manière appropriée autour du tube 36.

La figure 18 représente une rainure de reprise de tube dans la partie centrale de l'ailette 42 lors de l'insertion du tube 36.

Pour obtenir une pose sous pression entre le tube 36 et l'ailette 42, dans une deuxième étape de travail, les pattes latérales de la rainure de reprise de tube sont repoussées l'une contre l'autre vers l'intérieur de telle sorte que le tube 36 est maintenu en correspondance mécanique sur près de 270°. En plus de la pose sous pression, on peut évidemment penser à un brasage ou un collage, et dans ce cas il sera préférable d'intégrer dans l'adhésif des particules conductrices de chaleur, par exemple en aluminium.

Les tubes 36 sont des tubes métalliques à bonne conductivité thermique, supérieure à 180 W/m/K, et ils ont habituellement un diamètre extérieur de 4 à 10 mm, leur paroi ayant une épaisseur de 0,3 à 2 mm en fonction du fluide de refroidissement. L'épaisseur de la paroi du tube 36 pour un mélange d'eau et de glycol et pour le R 134a sera d'environ 0,3 à 1 mm et pour le CO₂ de 1 à 2 mm. Le diamètre intérieur des tubes pour un mélange d'eau et de glycol et le R 134a sera de 3 à 6 mm et pour le CO₂ de 1,5 à 4 mm. Un tube 36 alimente environ 1 à 10 cellules de batteries 16 et une ailette est associée à environ 1 à 3 cellules de batteries 16 et est en contact avec ces dernières.

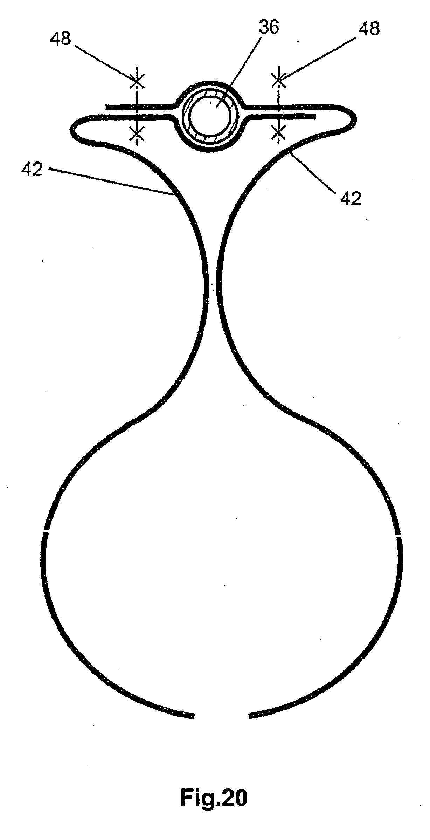

Dans la figure 20, on a représenté encore une fois à plus grande échelle l'installation représentée dans la figure 4 de deux ailettes 42 sur un tronçon de tube au moyen d'une fixation mécanique 48.

Globalement, ce mode de réalisation du dispositif de refroidissement permet d'obtenir une structure modulaire qui convient pour des modules de batteries de différentes tailles.

Le positionnement des tubes 36 peut également s'effectuer de manière très simple en formant des saillies de positionnement 20 appropriées dans le boîtier extérieur 10. On peut le voir aisément par exemple à l'aide du tronçon de tube 36 situé à droite dans la figure 5 et qui repose en étant maintenu entre une saillie de positionnement 20 et la couche d'isolation 34.

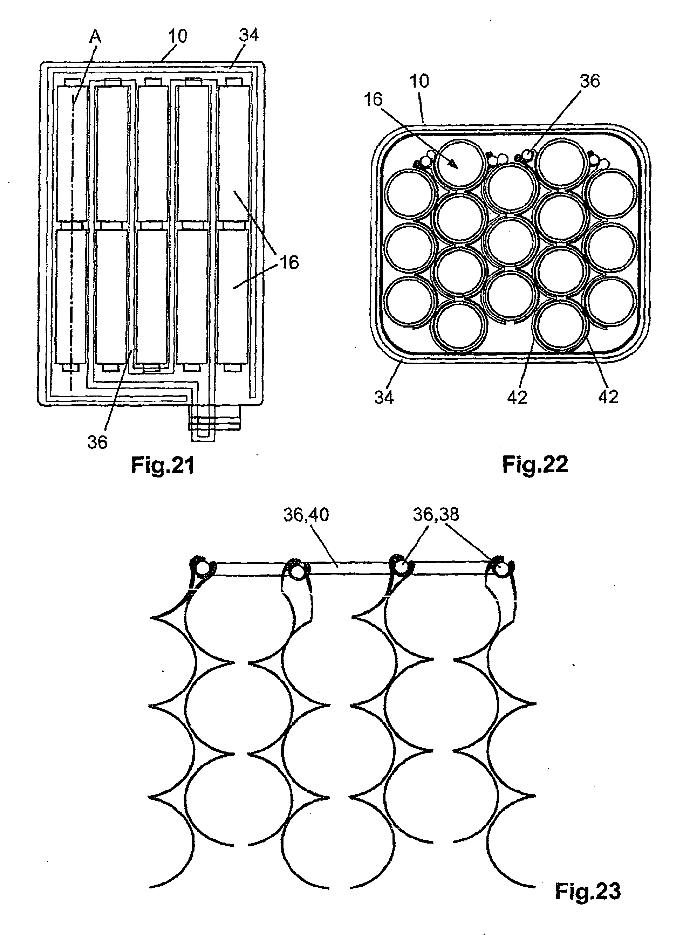

Dans le mode de réalisation de la figure 21, les cellules de batteries 16 sont non seulement disposées les unes à côté des autres et raccordées en série par des conducteurs de mise en contact 64, ainsi qu'on l'a représenté dans la figure 4, mais deux paquets superposés de cellules de batteries sont rassemblés en un paquet global. Les axes longitudinaux A des cellules de batteries 16 sont alignés de sorte que l'on obtient entre les cellules de batteries 16 des espaces intermédiaires communs et alignés les uns sur les autres, qui offrent de la place pour les tubes 36 et les ailettes 32 (voir également la figure 22).

Dans la figure 23, on a représenté un dispositif de refroidissement qui peut par exemple être prémonté complètement. Les parties 38 qui s'étendent en longueur portent ici par exemple chacune deux ailettes 42 qui sont fixées sur le tronçon 38 correspondant et qui reposent chacune sur un côté d'une série triple de cellules de batteries 16 adjacentes.

Expliquons maintenant le montage du module. Tout d'abord, les cellules de batteries 16 sont placées automatiquement dans le corps de base 12, une à une ou par groupes, et positionnées entre les saillies de positionnement 20 et les nervures 32. En parallèle, on monte le dispositif de refroidissement dans un outil de montage séparé, et les ailettes 42 sont d'abord fixées sur les tubes 36 déjà cintrés. Dans l'outil de montage, les ailettes sont cintrées autour de modèles qui simulent les cellules de batteries 16, les modèles ayant une dimension plus petite qui permet de garantir la pose ultérieure sous pression des ailettes 42. Les ailettes peuvent être préformées complètement dans un outil de laminage ou d'estampage raccordé en amont de manière à être maintenues dans l'outil de montage uniquement en correspondance avec la trame de positionnement des batteries, mais le formage des ailettes peut s'effectuer partiellement ou totalement dans l'outil de montage. Sur les modèles sont prévus des noquets qui s'évasent coniquement vers le bas. Ces noquets reprennent l'extrémité supérieure des cellules de batteries lorsqu'elles sont placées par le haut sur le paquet prémonté constitué du corps de base 12 et des cellules de batteries 16 et centrent avec précision les cellules de batteries 16. Comme les noquets sont plus larges que les cellules de batteries 16, quelle que soit la tolérance du boîtier de cellule 18, l'ensemble du dispositif de refroidissement avec les ailettes façonnées 32 peut être inséré vers le bas dans le corps de base 12, les ailettes 42 venant ainsi se placer sur les cellules 16.

On garantit ainsi que les différentes cellules de batteries 16 soient toutes sensiblement à la même température lors de leur chargement et leur déchargement et sont refroidies de manière uniforme lorsque les cellules de batteries 16 sont en contact avec la ou les ailettes 42 associées dans une mesure différente qui dépend de leur distance par rapport au tube 36 associé. Les cellules 16 disposées le plus près du tube 36 offrent l'avantage qu'à cause de la proximité vis-à-vis du tube 36, le tronçon d'ailette qui y repose est plus froid que les tronçons d'ailette plus éloignés du tube 36. Par des surfaces de contact de différentes tailles, on obtiendra un effet plus uniforme de refroidissement de toutes les batteries 16, de telle sorte que leur température ne varie que dans une plage de ± 2 à 3 K.

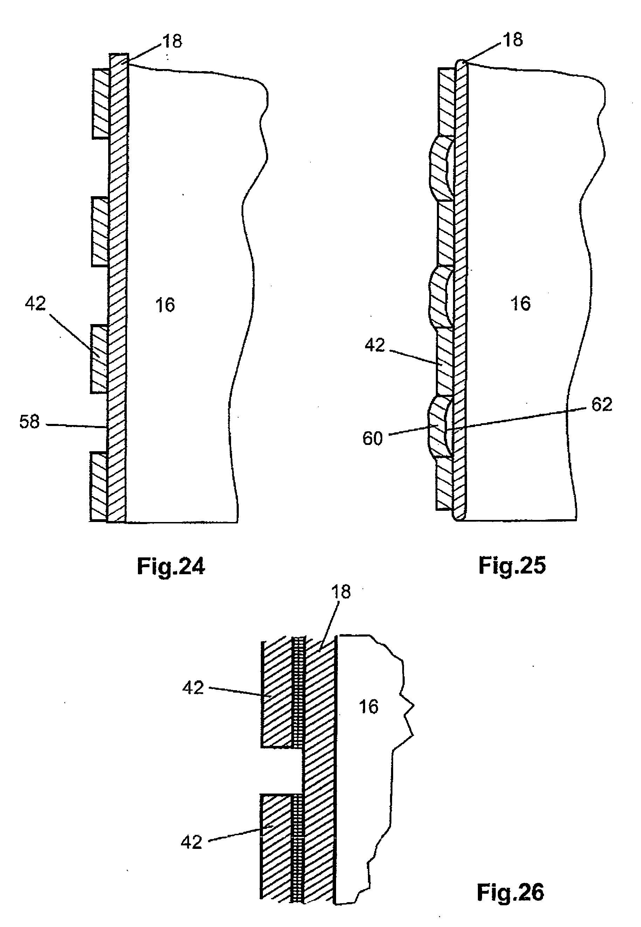

Par des découpes 58 ménagées dans les parties d'ailette situées le plus près du tube 36 (figure 24), par des creux 60 de formation d'un interstice d'air 62 qui devra être plus grand que 0,1 mm et de préférence plus grand que 0,5 mm ou en plaçant des ailettes 42 à distance les unes des autres (voir figure 26), on peut réaliser aisément et simplement différentes surfaces de pose et donc de transfert de chaleur.

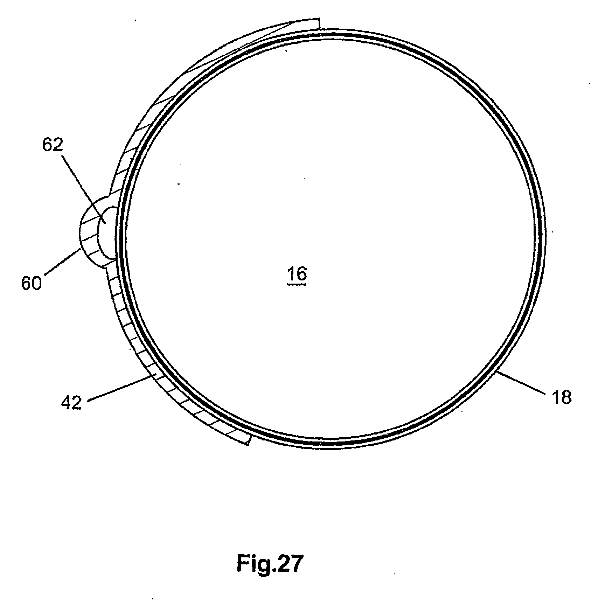

La figure 27 montre que le creux 60 peut également s'étendre le long de l'axe longitudinal des batteries et non pas uniquement le long de la périphérie de la batterie de la manière représentée dans la figure 25. Le creux 60 peut également n'être réalisé que localement et ne doit pas s'étendre sur toute la périphérie.

Normalement, toutes les cellules de batteries 16 qui sont rassemblées sous la forme d'une unité prémontée prête à l'emploi, à savoir un paquet de batteries, sont entourées en atelier par une enveloppe isolante en matière synthétique. Cette enveloppe en matière synthétique est fixée par retrait sur le boîtier extérieur métallique. Cette étape demande naturellement du temps et elle entraîne un enchérissement des cellules de batteries.

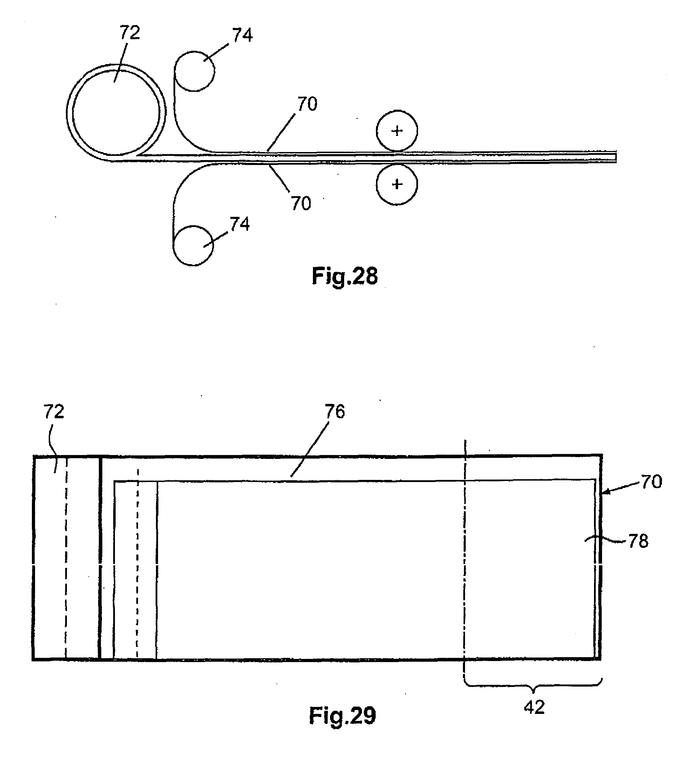

Dans les figures 28 et 29, on a représenté un procédé qui permet de réduire le coût des différentes cellules de batteries 16 dans un module selon l'invention.

Les cellules de batteries 16 sont en effet de préférence montées uniquement avec un boîtier extérieur 18 en métal et n'ont pas d'enveloppe isolante en matière synthétique. L'isolation électrique des cellules de batteries les unes par rapport aux autres s'effectue par des ailettes 42 recouvertes d'une couche isolante également appelée isolation 70 dans leur zone en contact avec le boîtier de cellule 18 en métal.

L'ailette 42 présente une couche isolante 70 de préférence sur ses deux faces, mais une couche isolante 70 sur une seule face peut naturellement être éventuellement suffisante.

Pour la préparation de la tôle dans laquelle les ailettes 42 sont découpées, on déroule une bobine de tôle 72 enroulée après sa fabrication. Lors du déroulement, on déroule en même temps des feuilles de matière synthétique enroulées sur des rouleaux 74 et on les stratifie en partie sur une ou deux faces de la tôle. On obtient une structure en sandwich contrecollée. Les rouleaux 74 n'ont cependant pas la largeur de la tôle, de sorte qu'il reste une bande 76 non isolée. Les différentes ailettes 42 sont découpées transversalement par rapport à la direction du déroulement du ruban sandwich ainsi obtenu (voir la ligne en traits interrompus dans la figure 29). Les ailettes sont alors fixées sur le tube 36 par le ruban non isolé 76, et en revanche, la partie isolée 78 sert à assurer le contact avec les cellules de batteries 16 et à les isoler.

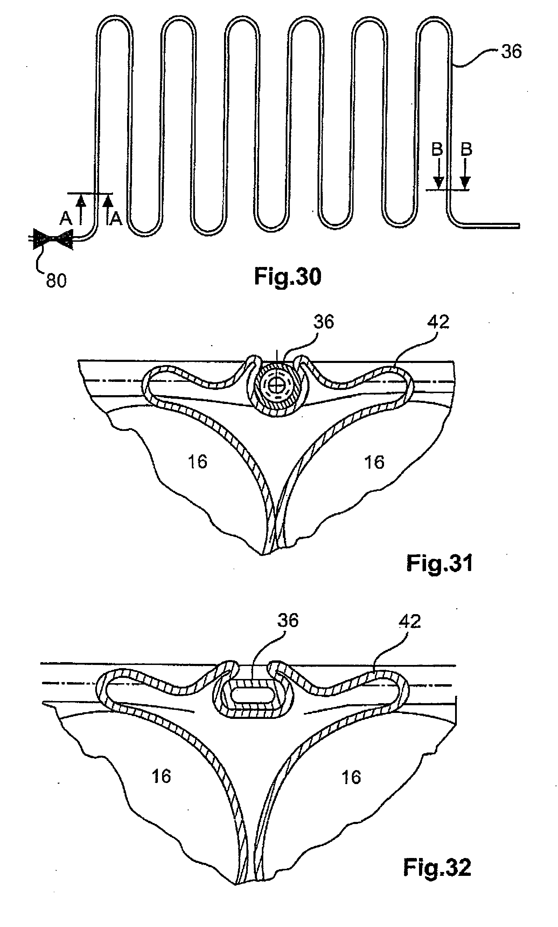

Dans la figure 30, on a représenté une partie en méandres du tube 36 qui est disposé à l'intérieur du module de batteries et qui conduit un agent de refroidissement zéotrope. Dans la zone de l'entrée d'un tube 36 dans le module de batteries est disposée une soupape thermostatique de détente 80. A proximité de son entrée dans le module d'entraînement (voir coupe A-A), le tube 36 a une plus grande section transversale que dans la zone de sa sortie (voir coupe B-B) . La différence de diamètre est sélectionnée de manière à faire apparaître une perte de charge dans l'agent de refroidissement situé à l'intérieur du tronçon de tube indiqué. Cette perte de charge est suffisamment grande pour que la température de saturation du fluide de refroidissement reste essentiellement constante dans le tronçon de tube.

Dans la figure 31, on peut voir le tube 38 entouré par une ailette 42. On a représenté par un trait interrompu la section transversale dans la zone de la coupe B-B.

La section transversale du tube diminue de préférence progressivement pour maintenir constante la température de saturation sur toute la longueur du tronçon de tube actif dans le module.

La diminution de diamètre représenté dans la figure 31 peut être difficile à réaliser, et pour cette raison, à titre de solution alternative, on a imaginé dans la figure 32 de modifier la section transversale d'écoulement du tube 38 par modification du tube, par exemple aplatissement. Un tel aplatissement permet en effet de diminuer progressivement de manière particulièrement simple la section transversale d'écoulement.

Grâce à cette structure, on peut obtenir une température de saturation uniforme sur tout le tronçon de tube.

On pourrait obtenir un effet similaire en intercalant des soupapes, par exemple d'autres soupapes thermostatiques de détente.

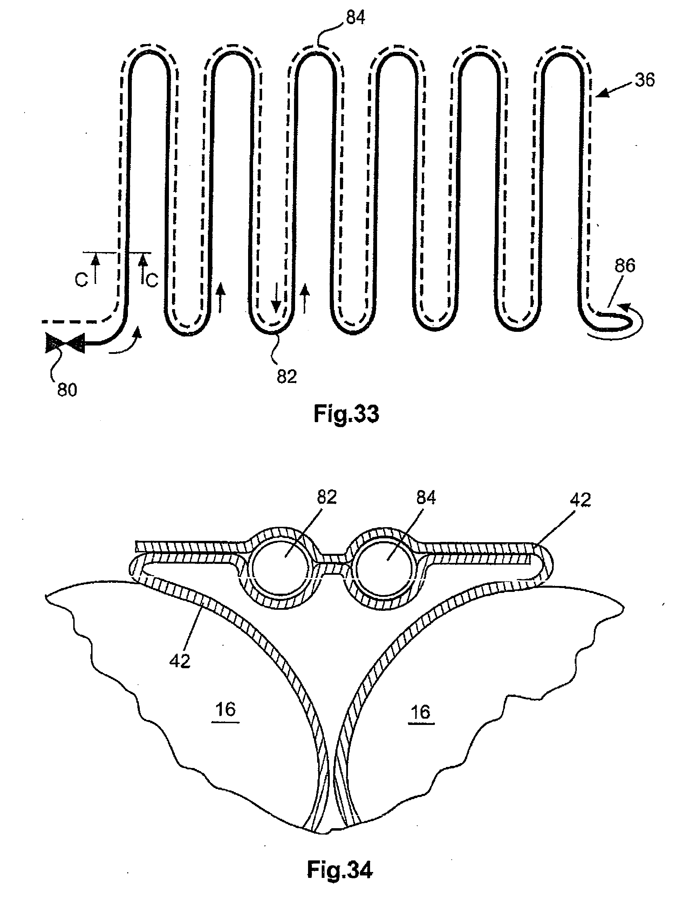

Dans le mode de réalisation de la figure 33, deux tronçons de tube 82, 84 sont disposés en parallèle à petite distance l'un de l'autre et façonnés en méandres. Les tronçons de tube 82 (représentés par un trait continu) et 84 (symbolisés par un trait interrompu) sont deux tronçons immédiatement successifs d'un seul tube 36. A l'entrée, dans la zone de la soupape 80, l'agent de refroidissement zéotrope pénètre dans le tronçon de tube 82 qui longe les cellules de batteries 16 jusqu'à un point de renvoi 86 et de là, par le tronçon de tube 84, en parallèle et à contre-courant, vers le tronçon de tube 82 jusqu'à la sortie du module.

Dans la figure 34, on a représenté les deux tronçons de tube 82, 84 disposés à proximité immédiate l'un de l'autre et ainsi maintenus en contact thermique. Les deux tronçons de tube 82, 84 peuvent également se toucher. Les ailettes 42 entourent les deux tronçons de tube 82, 84, de sorte que l'on obtient une température moyenne des ailettes dans la zone des cellules de batteries 16, bien que la température de saturation du fluide de refroidissement soit différente dans les tronçons de tube 82, 84.

Dans les modes de réalisation des figures 30 à 34, les tubes 36 font partie d'un circuit d'agent de refroidissement qui n'a été représenté qu'en partie.

Au lieu de deux tronçons de tube 82, 84 d'un tube 36, on peut évidemment aussi prévoir deux tubes séparés l'un de l'autre qui sont traversés dans des sens opposés.

## Revendications

1. Module de batteries d'entraînement pour véhicule électrique, à cellules à combustible ou hybride, pour le transport de personnes et/ou de marchandises, qui présente :
plusieurs cellules de batteries (16), chacune séparée de l'extérieur par son propre boîtier de cellule (18), préfabriquées et rassemblées en un paquet de cellules,
ledit module de batteries comprenant un boîtier extérieur (10) en matière synthétique qui sépare le module de l'extérieur, et des saillies de positionnement (20) formées sur le côté intérieur du boîtier extérieur (10) qui engagent et immobilisent les cellules de batteries (16), lesdites saillies de positionnement (20) présentent des parties (28, 30) d'élasticité différente, **caractérisé en ce que** les saillies de positionnement (20) s'engagent sur les côtés frontaux (24) et sur les bords du côté périphérique (26) des cellules de batteries (16) afin de les immobiliser dans toutes les directions.

2. Module de batteries d'entraînement selon la revendication 1, **caractérisé en ce que** les cellules de batteries (16) sont des corps cylindriques et en particulier cylindriques circulaires et **en ce que** les saillies de positionnement (20) s'étendent dans les espaces intermédiaires situés entre des cellules de batteries (16) voisines.

3. Module de batteries d'entraînement selon la revendication 1, **caractérisé en ce que** les saillies de positionnement (20) présentent des parties (28, 30) en matières synthétiques différentes.

4. Module de batteries d'entraînement selon l'une des revendications 1 à 3, **caractérisé en ce qu'**une partie (28) qui s'étend entre des cellules de batteries (16) voisines d'au moins une saillie de positionnement (20) est constituée d'une matière synthétique plus élastique qu'une saillie (30) adjacente.

5. Module de batteries d'entraînement selon la revendication 3 ou 4, **caractérisé en ce que** les parties (28, 30) en matières synthétiques différentes sont fabriquées par moulage par injection à plusieurs composants.

6. Module de batteries d'entraînement selon l'une des revendications 1 à 5, **caractérisé en ce que** les cellules de batteries (16) sont des corps cylindriques allongés.

7. Module de batteries d'entraînement selon l'une des revendications 1 à 6, **caractérisé en ce que** les saillies de positionnement (20) s'étendent latéralement dans le sens de la longueur des cellules de batteries (16) associées sur une longueur qui représente entre 2 et 20 % de la longueur totale des cellules de batteries (16) associées.

8. Module de batteries d'entraînement selon l'une des revendications 1 à 7, **caractérisé en ce qu'**au moins un tube (36) qui conduit un fluide de refroidissement qui évacue l'énergie thermique des cellules de batteries (16) s'étend dans le boîtier extérieur (10), le tube (36) étant immobilisé dans le boîtier extérieur (10) par des saillies de positionnement (20).

9. Module de batteries d'entraînement selon la revendication 8, **caractérisé en ce qu'**au moins une ailette de refroidissement (42) s'étend entre le tube (36) et une ou plusieurs cellules de batteries (16) pour être appliquée à plat contre leur côté extérieur, des saillies de positionnement (20) étant prévues pour immobiliser les ailettes.

10. Module de batteries d'entraînement selon la revendication 9, **caractérisé en ce qu'**une saillie de positionnement (20) engage plusieurs ailettes (42) pour les immobiliser.

11. Module de batteries d'entraînement selon l'une des revendications 1 à 10, **caractérisé en ce que** les cellules de batteries (16) sont serrées latéralement par une saillie de positionnement (20) ou entre plusieurs saillies de positionnement (20).

12. Module de batteries d'entraînement selon l'une des revendications précédentes, **caractérisé en ce que** le boîtier extérieur (10) présente un corps de base (12) ouvert d'un côté et un couvercle (14) qui ferme ce dernier, des saillies de positionnement (20) étant formées sur le corps de base (12) et/ou le couvercle (14).

13. Module de batteries d'entraînement selon l'une des revendications précédentes, **caractérisé en ce qu'**une couche thermiquement isolante (70) est placée sur le côté intérieur du boîtier extérieur (10).

## Claims

1. Drive battery module for a fuel-cell or a hybrid electric vehicle for the transport of passengers and/or goods, which has:
several battery cells (16), each separated from the outside by its own cell casing (18), prefabricated and assembled into a pack of cells,
said battery module comprising an outer casing (10) made of synthetic material that separates the module from the outside, and positioning protrusions (20) formed on the inside of the outer casing (10) which engage and immobilize the battery cells (16), said positioning protrusions (20) having portions (28, 30) of different elasticity, **characterized in that** the positioning protrusions (20) engage on the front sides (24) and on the edges of the peripheral side (26) of the battery cells (16), in order to immobilize them in all directions.

2. Drive battery module according to Claim 1, **characterized in that** the battery cells (16) are cylindrical bodies and in particular circular cylindrical bodies and **in that** the positioning protrusions (20) extend in the intermediate spaces situated between adjacent battery cells (16).

3. Drive battery module according to Claim 1, **characterized in that** the positioning protrusions (20) have portions (28, 30) made of different synthetic materials.

4. Drive battery module according to one of Claims 1 to 3, **characterized in that** a portion (28) which extends between adjacent battery cells (16) of at least one positioning protrusion (20) is made of a synthetic material that is more elastic than an adjacent protrusion (30).

5. Drive battery module according to Claim 3 and 4, **characterized in that** the portions (28, 30) made of different synthetic materials are manufactured by injection moulding with several components.

6. Drive battery module according to one of Claims 1 to 5, **characterized in that** the battery cells (16) are elongate cylindrical bodies.

7. Drive battery module according to one of Claims 1 to 6, **characterized in that** the positioning protrusions (20) extend laterally in the direction of the length of the associated battery cells (16) over a length that represents between 2 and 20% of the total length of the associated battery cells (16).

8. Drive battery module according to one of Claims 1 to 7, **characterized in that** at least one tube (36) which carries a cooling fluid which evacuates the thermal energy from the battery cells (16) extends in the outer casing (10), the tube (36) being immobilized in the outer casing (10) by positioning protrusions (20).

9. Drive battery module according to Claim 8, **characterized in that** at least one cooling fin (42) extends between the tube (36) and one or more battery cells (16) in order to be pressed flat against their outer side, positioning protrusions (20) being provided to immobilize the fins.

10. Drive battery module according to Claim 9, **characterized in that** one positioning protrusion (20) engages several fins (42) to immobilize them.

11. Drive battery module according to one of Claims 1 to 10, **characterized in that** the battery cells (16) are clamped laterally by one positioning protrusion (20) or between several positioning protrusions (20).

12. Drive battery module according to one of the preceding claims, **characterized in that** the outer casing (10) has a basic body (12) that is open on one side and a cover (14) which closes the latter, positioning protrusions (20) being formed on the basic body (12) and/or the cover (14).

13. Drive battery module according to one of the preceding claims, **characterized in that** an insulating thermal layer (70) is placed on the inside of the outer casing (10).

## Patentansprüche

1. Antriebsbatteriebaugruppe eines Elektro-, Brennstoffzellen- oder Hybridfahrzeugs zum Transport von Personen und/oder Waren, mit
mehreren nach außen durch jeweils eigene Zellengehäuse (18) geschlossenen, vorgefertigten und zu einem Zellenpaket zusammengefassten Batteriezellen (16),
wobei die Batteriebaugruppe ein die Baugruppe nach außen abschließendes Außengehäuse (10) aus Kunststoff, und an das Außengehäuse (10) innenseitig angeformte Positioniervorsprünge (20) enthält, welche Positioniervorsprünge an die Batteriezellen (16) angreifen und sie lagesichern, wobei die Positioniervorsprünge (20) Abschnitte (28, 30) unterschiedlicher Elastizität aufweisen, **dadurch gekennzeichnet, dass** die Positioniervorsprünge (20) an die Stirnseiten (24) und die Ränder der Umfangsseiten (26) der Batteriezellen (16) angreifen um diese in allen Richtungen lagezusichern.

2. Antriebsbatteriebaugruppe nach Anspruch 1, **dadurch gekennzeichnet, dass** die Batteriezellen (16) zylindrische, insbesondere kreiszylindrische Körper sind und sich die Positioniervorsprünge (20) in Zwischenräume zwischen benachbarten Batteriezellen (16) erstrecken.

3. Antriebsbatteriebaugruppe nach Anspruch 1, **dadurch gekennzeichnet, dass** die Positioniervorsprünge (20) Abschnitte (28, 30) aus unterschiedlichen Kunststoffen aufweisen.

4. Antriebsbatteriebaugruppe nach einem der Ansprüche 1 bis 3, **dadurch gekennzeichnet, dass** ein sich zwischen benachbarten Batteriezellen (16) erstreckender Abschnitt (28) zumindest eines Positioniervorsprungs (20) aus einem elastischeren Kunststoff besteht als ein angrenzender Abschnitt (30).

5. Antriebsbatteriebaugruppe nach Anspruch 3 oder 4, **dadurch gekennzeichnet, dass** die Abschnitte (28, 30) aus unterschiedlichen Kunststoffen durch Mehrkomponenten-Spritzgießen hergestellt sind.

6. Antriebsbatteriebaugruppe nach einem der Ansprüche 1 bis 5, **dadurch gekennzeichnet, dass** die Batteriezellen (16) langgestreckte zylindrische Körper sind.

7. Antriebsbatteriebaugruppe nach einem der Ansprüche 1 bis 6, **dadurch gekennzeichnet, dass** sich die Positioniervorsprünge (20) in Längsrichtung seitlich der zugeordneten Batteriezellen (16) auf einer Länge erstrecken, die zwischen 2 und 20 % der Gesamtlänge der zugeordneten Batteriezellen (16) entspricht.

8. Antriebsbatteriebaugruppe nach einem der Ansprüche 1 bis 7, **dadurch gekennzeichnet, dass** sich wenigstens ein ein Kühlfluid führendes Rohr (36) zum Abtransport von Wärmeenergie der Batteriezellen (16) durch das Außengehäuse (10) erstreckt, wobei das Rohr (36) durch Positioniervorsprünge (20) im Außengehäuse (10) lagegesichert ist.

9. Antriebsbatteriebaugruppe nach Anspruch 8, **dadurch gekennzeichnet, dass** sich wenigstens eine Kühllamelle (42) vom Rohr (36) zu einer oder mehreren Batteriezellen (16) erstreckt, um sich flächig an deren/dessen Außenseite anzulegen, wobei Positioniervorsprünge (20) zum Lagesichern der Lamelle vorgesehen sind.

10. Antriebsbatteriebaugruppe nach Anspruch 9, **dadurch gekennzeichnet, dass** ein Positioniervorsprung (20) mehrere Lamellen (42) in Eingriff nimmt, um diese lagezusichern.

11. Antriebsbatteriebaugruppe nach einem der Ansprüche 1 bis 10, **dadurch gekennzeichnet, dass** die Batteriezellen (16) seitlich durch einen oder zwischen mehreren Positioniervorsprüngen (20) festgeklemmt sind.

12. Antriebsbatteriebaugruppe nach einem der vorhergehenden Ansprüche, **dadurch gekennzeichnet, dass** das Außengehäuse (10) einen einseitig offenen Grundkörper (12) und einen diesen schließenden Deckel (14) aufweist, wobei am Grundkörper (12) und/oder Deckel (14) Positioniervorsprünge (20) angeformt sind.

13. Antriebsbatteriebaugruppe nach einem der vorhergehenden Ansprüche, **dadurch gekennzeichnet, dass** innenseitig am Außengehäuse (10) eine thermische Isolierschicht (70) angebracht ist.
